(19) **Europäisches Patentamt**
**European Patent Office**
**Office européen des brevets**

(11) **EP 1 668 593 B1**

(12) **EUROPEAN PATENT SPECIFICATION**

(45) Date of publication and mention
of the grant of the patent:
**27.02.2008 Bulletin 2008/09**

(51) Int Cl.:
***G06T 5/00*** *(2006.01)*

(21) Application number: **04789427.4**

(86) International application number:
**PCT/US2004/032297**

(22) Date of filing: **29.09.2004**

(87) International publication number:
**WO 2005/034036 (14.04.2005 Gazette 2005/15)**

(54) **ROBUST RECURSIVE ENVELOPE OPERATORS FOR FAST RETINEX-TYPE PROCESSING OF IMAGES**

ROBUSTE REKURSIVE HÜLLENOPERATOREN FÜR DIE SCHNELLE VERARBEITUNG VON BILDERN DES RETINEX-TYPS

OPERATEURS D'ENVELOPPE RECURSIFS ROBUSTES POUR TRAITEMENT DE TYPE RETINEX RAPIDE

(84) Designated Contracting States:
**AT BE BG CH CY CZ DE DK EE ES FI FR GB GR HU IE IT LI LU MC NL PL PT RO SE SI SK TR**

(30) Priority: **02.10.2003 US 675943**

(43) Date of publication of application:
**14.06.2006 Bulletin 2006/24**

(73) Proprietor: **Hewlett-Packard Development Company, L.P.**
**Houston, TX 77070 (US)**

(72) Inventors:
• **SHAKED, Doron**
**34361 Haifa (IL)**
• **KESHET, Renato**
**34334 Haifa (IL)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**WO-A-02/089062       US-A- 5 991 456**
**US-B1- 6 788 822**

• **MARSI S ET AL: "Image contrast enhancement using a recursive rational filter" IMAGING SYSTEMS AND TECHNIQUES, 2004. (IST). 2004 IEEE INTERNATIONAL WORKSHOP ON STRESA, ITALY MAY 14, 2004, PISCATAWAY, NJ, USA, IEEE, 14 May 2004 (2004-05-14), pages 29-34, XP010773409 ISBN: 0-7803-8591-8**
• **KIMMEL R ET AL: "A Variational framework for Retinex" PROCEEDINGS OF THE SPIE, SPIE, BELLINGHAM, VA, US, vol. 4672, January 2002 (2002-01), pages 409-418, XP002243110 ISSN: 0277-786X**
• **LAND E H: "THE RETINEX THEORY OF COLOR VISION" SCIENTIFIC AMERICAN, SCIENTIFIC AMERICAN INC. NEW YORK, US, vol. 237, no. 6, December 1977 (1977-12), pages 108-120,122, XP008041094 ISSN: 0036-8733**
• **MCKENNA S J ET AL: "Tracking colour objects using adaptive mixture models" IMAGE AND VISION COMPUTING ELSEVIER NETHERLANDS, vol. 17, no. 3-4, March 1999 (1999-03), pages 225-231, XP002332756 ISSN: 0262-8856**

**Description**

**Technical Field**

The technical field is color image correction, and more particularly color image correction using Retinex-type algorithms.

**Background**

When compared to the direct observation of scenes, color images in general have two major limitations due to scene lighting conditions.. First, the images captured and displayed by photographic and electronic cameras suffer from a comparative loss of detail in either shadowed or highlight zones. This is known as the dynamic range problem. Second, the images are subject to color distortions when the spectral distribution of the illuminant changes. This is known as the color constancy problem. For non-color imaging including non-optical imaging, the problem becomes simpler and is largely one of dynamic range compression, i.e., the capture and representation of detail and lightness values across wide ranging average signal levels that can vary dramatically across a scene.

Electronic cameras based upon CCD detector arrays are capable of acquiring image data across a wide dynamic range on the order to 2500:1. This dynamic range is suitable for handling most illumination variations within scenes, and lens aperture changes are usually employed to encompass scene-to-scene illumination variations. Typically though, this dynamic range is lost when the image is digitized or when the much narrower dynamic range of print and display media are encountered. For example, most images are digitized to 8-bits/color band (256 gray levels/color band) and most display and print media are even more limited to a 50:1 dynamic range.

A commonly encountered instance of the color constancy problem is the spectral difference between daylight and artificial (e.g., tungsten) light, which is sufficiently strong to require photographers to shift to some combination of film, filters and processing to compensate for the spectral shift in illumination. Though film photographers can attempt to approximately match film type to spectral changes in lighting conditions, digital cameras must rely strictly on filters. However, these methods of compensation do not provide any dynamic range compression thereby causing detail in shadows or highlights to be lost or severely attenuated compared to what a human observer would actually see.

Another problem encountered in color and non-color image processing is known as color/lightness rendition. This problem results from trying to match the processed image with what is observed and consists of 1) lightness and color "halo" artifacts that are especially prominent where large uniform regions of an image abut to form a high contrast edge with "graying" in the large uniform zones, and 2) global violations of the gray world assumption (e.g., an all-red scene) which results in a global "graying out" of the image.

Since human vision does not suffer from these various imaging drawbacks, it is reasonable to attempt to model machine vision based on human vision. A theory of human vision centered on the concept of a center/surround Retinex (retina and cortex) was introduced by Edwin Land in "An Alternative Technique for the Computation of the Designator in the Retinex Theory of Color Vision," Proceedings of the National Academy of Science, Volume 83, pp. 3078-3080, 1986. Land drew upon his earlier Retinex concepts disclosed in "Color Vision and The Natural Image," Proceedings of the National Academy of Science, Volume 45, pp. 115-129, 1959, but harmonized these with certain findings of the neurophysiology of vision. All of the Retinex concepts were intended to be models for human color perception. The earlier Retinex concepts involved "random walks" across image space and the resetting of the computation when color boundaries were crossed. Land's 1986 Retinex concept of human vision was proposed as a center/surround spatial computation where the center was 2-4 arc-minutes in diameter and the surround was an inverse square function with a diameter of about 200-250 times that of the center.

The application of Land's human vision theories to image processing has been attempted in the prior art. For example, to mimic the dynamic range compression of human vision, a detector array with integrated processing in analog VLSI silicon chips used a logarithm transformation prior to the surround formation. See "Analog VLSI and Neural Systems," C. Mead, Addison-Wesley, Reading, Mass., 1989. In an attempt to improve color constancy, the implementation of a color Retinex in analog VLSI technology is suggested by Moore et al., in "A Real-time Neural System for Color Constancy," IEEE Transactions on Neural Networks, Volume 2, pp. 237-247, March 1991. In Moore et al., the surround function was an exponential and final processing before display of the image required the use of a variable gain adjustment that set itself by finding the absolute maximum and minimum across all three color bands' signal values.

Central to these and other prior art Retinex methods is a Retinex-type algorithm.

International patent applications WO 02/089062 A2 describes an iterative implementation of a Retinex-type algorithm.

A perceived image $S$ is a multiplication between the illumination $L$ shed on visible surfaces and the respective reflectance $R$ of the surfaces. Thus

$$(1) \quad S = R \cdot L.$$

An underlying assumption behind Retinex algorithms is that the illumination is an artifact. Illumination is estimated and either removed completely: $S_1 = S/L = R$; or partially: $S_2 = S/f(L)$, where $f(L)$ is a function of the illumination. Estimating $L$ from $S$ is the main algorithmic and computational problem when using Retinex algorithms.

Estimating $L$ from $S$ is not possible unless something else is known about either $L$ or $R$. Most illumination estimation algorithms share a basic Retinex assumption that edges in a scene are edges in the reflectance, whereas illumination changes slowly. Thus, in most Retinex algorithms, the estimated $L$ is a smooth version of the input $S$. Consequently, most Retinex algorithms include a strong smoothing filter. When solving the Retinex algorithm, this smoothing filter presents a computational bottleneck, due in part to the large support kernel required for good image quality. That is, for good image quality, the support of the kernel has to be larger than the largest expected object, and thus on the order of the size of the input image. At least two other requirements add to the complexity of characterizing the illumination $L$: an envelope requirement and a robustness requirement.

*The envelope requirement:* In a scene with no directly visible light sources, the reflectance is smaller than one, or in other words, surfaces cannot reflect more light than is shed on the surfaces. Thus, the illumination $L$ is a smooth local envelope rather than a local average, i.e., $L \geq S$ everywhere.

*The robustness requirement: L* is piecewise smooth rather than smooth. This corrects a classical Retinex paradigm, and stems from a more accurate description of real world scenes. Typical scenes with illumination discontinuities are backlit or flash scenes, scenes with shadows, and mixed indoor-outdoor scenes. The piecewise smooth illumination model is also good for scenes with visible light sources and specularities. As elsewhere, robustness implies that a local average is not affected by outliers (e.g., pixels across an edge). Thus, the estimated illumination is discontinuous in locations where the input image $S$ has strong discontinuities. In those locations, the discontinuities in L are preferably similar to those in $S$.

The problem of designing an efficient smoothing filter is especially difficult when non-linear variants such as the envelope and robustness are required; however, several alternative implementations for convolution are possible. Table 1 lists some of these implementations, and compares the implementations in terms of computational complexity. Assuming that the image and the kernel have square supports of size *NxN* and *KxK* respectively (with $N \geq K$).

Table 1

| Method | Complexity |
|---|---|
| Space domain | $O(N^2 \cdot K^2)$ |
| Frequency domain | $O(N^2 \cdot \log(N))$ |
| Kernel decomposition | $O(N^2 \cdot \log(K)$ |
| Pyramidal methods | $O(N^2)$ |

In Table 1, *space domain* refers to direct convolution, and *frequency domain* refers to convolution implemented via two-dimensional (2D) fast Fourier transform. *Kernel decompositions* are based on dyadic filters. *Pyramidal methods* are based on the Laplacian pyramid, and are linear in input complexity.

For many of the above implementations, a robust/envelope version can be found, i.e., an algorithm that returns an envelope rather than a linear averaging, or one that produces piece-wise smooth results. For example, spatial envelopes can be obtained through classical mathematical morphology. Frequency domain, being the eigenspace of linear methods, is not easily amenable to the non-linear robust or envelope versions. Nevertheless, the slope transform is the morphologic equivalent to the Fourier transform. For efficient kernel decompositions, the result of each convolution is clipped to be above the input image, and robustness may be added by making each dyadic average a function of the two pixel values. For Pyramidal envelopes, the envelope requirement may be enforced at each level, and robustness may be incorporated by replacing robust metrics with a mean square measure in the energy functional.

## Summary

What is disclosed is an apparatus for processing color images. The apparatus includes an input processor, where an image is received, a Retinex-type processor, and an output processor. The Retinex-type processor includes a local statistics processor and a point operation processor. The local statistics processor includes a cascaded recursive filter.

Also disclosed is a robust recursive envelope operator for fast Retinex processing that includes a cascaded recursive filter of the form

$$L_{i,j}^{xx} = \max\left\{\alpha(\nabla_x S) \cdot L_{i-1,j} + (1 - \alpha(\nabla_x S)) \cdot S_{i,j}, \right.$$
$$\left. \alpha(\nabla_y S) \cdot L_{i,j-1} + (1 - \alpha(\nabla_y S)) \cdot S_{i,j}, \quad S_i\right\}$$

where $\alpha(\nabla s)$ is a scale independent parameter, and xx is a compass notation, where the robust recursive envelope operator processes an input image signal S.

Finally, what is disclosed is a method for processing an input image S, including the steps of applying an open/close prefilter to the image S, applying a cascaded recursive filter to the image S, and applying a post filter maximum output to the image S.

## Description of the Drawings

The detailed description will refer to the following drawings in which like numbers refer to like items, and in which:

Figure 1 illustrates a system for Retinex-type processing;
Figures 1b and 1c illustrate an embodiment of an algorithm for processing an input image;
Figures 2a and 2b illustrate a signal and its casual output signals;
Figure 3 illustrates a signal and its output signal using a cascaded filter,
Figure 4 illustrates an input signal, a corresponding output signal, and the flipped output of the flipped input signal;
Figure 5 illustrates a Huber influence for a constant parameter in a recursive filter,
Figure 6 illustrates a robust version of the output signal illustrated in Figure 2a;
Figures 7a - 7c illustrate an input image and its robust and non-robust envelopes;
Figures 8a and 8b are zoom-ins of the robust and non-robust envelopes of Figures 7a and 7c, respectively;
Figure 9 is a block diagram illustrating dimension interleaving in a cascaded recursive filter;
Figure 10 is an information flow diagram illustrating the concept of information flow barriers in a simple barrier system;
Figure 11 illustrates information flow in a complex barrier system;
Figure 12 illustrates a cross section of an edge and corresponding gradient functions;
Figures 13a - 13c illustrate a failure of a scale independent recursion;
Figures 14a -14d illustrate bright dot and dark canyon artifacts in an image;
Figure 15 illustrates a scale independent robust envelope obtain by application of the robust recursive Retinex algorithm of Figure 1b;
Figures 16a - 16d illustrate application of the robust recursive Retinex algorithm of Figure 1b; and
Figures 17a - 17d illustrate application of the robust recursive Retinex algorithm of Figure 1b and an alternative Retinex algorithm.

## Detailed Description

To overcome computational problems with prior art Retinex modeling, a robust envelope algorithm based on recursive filtering is disclosed. The algorithm is developed in the context of a Retinex-type algorithm. Also disclosed are ways to determine stable filter parameters. The filter can be stabilized by making the filter scale invariant. A filter is scale invariant when its output for a scaled input is a scaled version of the original output (or at least very nearly so). Finally, what is disclosed is a scheme for a scale-independent version of robust recursive envelope filters.

Retinex-type algorithms are image enhancement algorithms based on calculating some local support statistics and modifying the input image according to the local statistics. Retinex-type algorithms take several different forms. One such form is the random walk algorithm, which is a discrete time random process in which the "next pixel position" is chosen randomly from neighbors of the current pixel position. Random walk type Retinex algorithms are variants of the following basic formulation: A large number of walkers are initiated at random locations of the logarithmic signal ($s$), adopting a gray-value of their initial position. An accumulator image $A$ that has the same size as $s$ is initialized to zero. As a walker walks around, the walker updates $A$ by adding the value of the walker to each position (x,y) that the walker visits. The illumination image is obtained by normalizing the accumulator image $A$, i.e., the value at each position of the accumulator image $A$ is divided by the number of walkers that visited that position.

By using many walkers with long paths, one can easily verify that the accumulator value at each position converges to a Gaussian average of that position's neighbors.

Another type of Retinex algorithm uses homomorphic filtering, where a low-pass filter is used to reconstruct $l$ from $s$. Homomorphic Retinex algorithms are based on the fact that the reflectance image $R$ corresponds to the sharp details in the image (i.e., the edges), whereas the illumination $L$ is expected to be spatially smooth. Then, a reasonable guess for $l$ is $l^* = LP\{s\}$, where LP is a convolution with a wide Gaussian kernel. Thus, the Retinex algorithm using homomorphic filtering actually applies the same process as the random walk algorithms by a single direct convolution.

Since the illumination $L$ is expected to be spatially smooth, the derivative of the illumination $L$ should be close to zero. However, considering the assumption that the reflectance $R$ is piece-wise constant, the derivative of the reflectance R should vanish almost everywhere, with high values along edges of an image. Taking the derivative of the sum $s = l + r$ and clipping out high derivative peaks, implies that the clipped derivative signal corresponds only to the illumination $L$. Poisson equation-type Retinex algorithms that rely on the Mondrian world model, use the above assumptions on the reflectance $R$ as a piece-wise constant image. Applying the Laplacian, and the following clipping operation:

$$\tau(\Delta s) = \Delta s$$

where $|\Delta s| < \tau$

$$\tau(\Delta s) = 0$$

otherwise,
yields the following Poisson equation

$$\Delta l^* = \tau(\Delta s)$$

 A solution to the Poisson equation may involve an iterative procedure that effectively inverts the Laplacian operator. Improvements to the method involve extracting discontinuities from the image gradient magnitude instead of the Laplacian to provide better boundary conditions.

One solution involves use of an iterative algorithm having a "reset" non-linearity that enforces the constraint $l$ $\chi s$. The algorithm performs the interactive procedure:

$$l_{n+1}^* = \max\left\{\frac{l_n^* + s}{2}, \frac{l_n^* + D_n[l_n^*]}{2}\right\}$$

where $D_n$ is a translation operator, shifting the image s by the $n^{th}$ element of a sequence of spirally decaying translation vectors. Removing the max operation yields a simplified version

$$l_{n+1}^* = \frac{l_n^* + D_n[l_n^*]}{2}$$

The above equation is a simple averaging operation that smoothes the images. The non-linear (max) operation forces the illumination image $l$ to satisfy the constraint $l^* \chi s$.

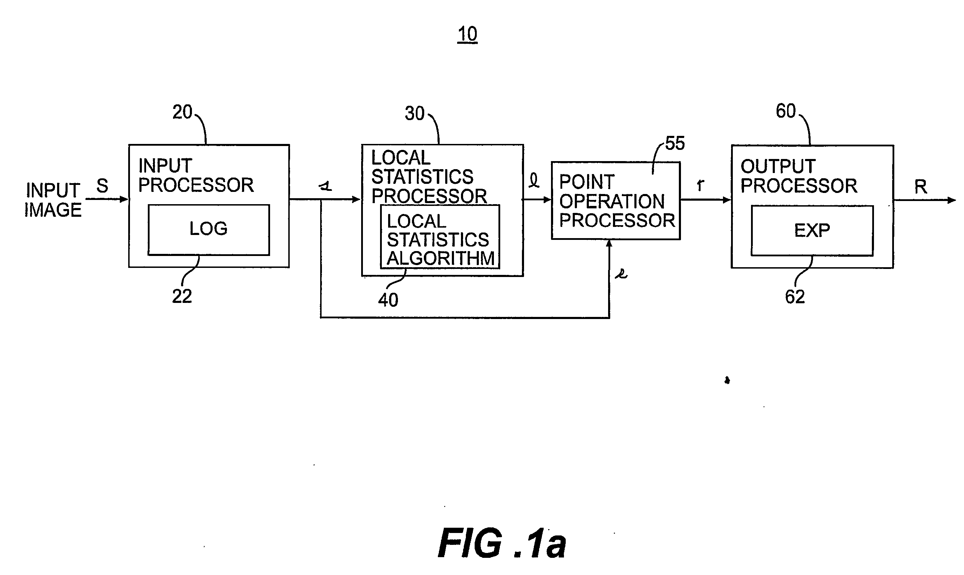

Figure 1a illustrates an image processing system 10 in which Retinex-type processing is applied to an input image signal S. The system 10 may be incorporated in a digital camera, or any other device capable of capturing or receiving an image. The system 10 is capable of outputting image data in the form of digital data indexed to represent the intensity I at a particular position (x,y) in the image. In the embodiment shown in Figure 1a, a "position" in the image S may be no larger than one pixel. Each such position (x,y) in the image $S$ then refers to a single row/column pixel position, and can be represented in a J-row by K-column display. The intensity of each pixel or I(x,y) is adjusted and filtered by the image processing system 10 as will be detailed below.

In Figure 1a, the input image signal S is applied to input processor 20. Included in the input processor 20 is a log module 22 that transforms the signal $S$ into its logarithmic equivalent, s. The signal $s$ is then applied to local statistics processor 30. The local statistics processor 30 uses local statistics algorithm 40 to produce output illumination signal $l$.

The illumination signal *I* is then applied to point operation adder 55, which also receives the signal *s,* to produce reflectance signal *r*. The point operation 55 has two images as input, and an image of the same size as output, the pixels of which are a function of the two corresponding input pixels. Adder (r =1 + s) is a simple example of point operation 55. The reflectance signal r is then applied to output processor 60. The output processor 60 includes exponential module 62, which transforms the reflectance signal r into output reflectance signal *R*.

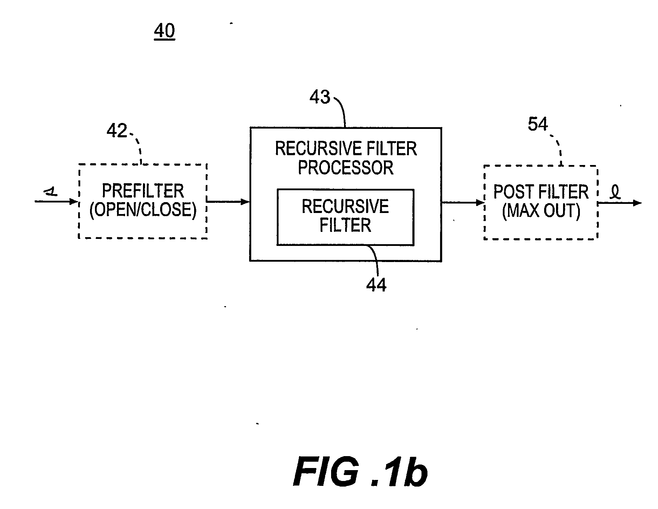

Figure 1b is a block diagram of the local statistic algorithm 40 implementing a robust recursive Retinex envelope operator. In Figure 1b, algorithm 40 includes optional pre-filter 42, recursive filter processor 43, and optional post filter 54. The recursive filter processor 43 includes recursive filter 44. The functions and structure of the above modules of the algorithm 40 will be explained in more detail later.

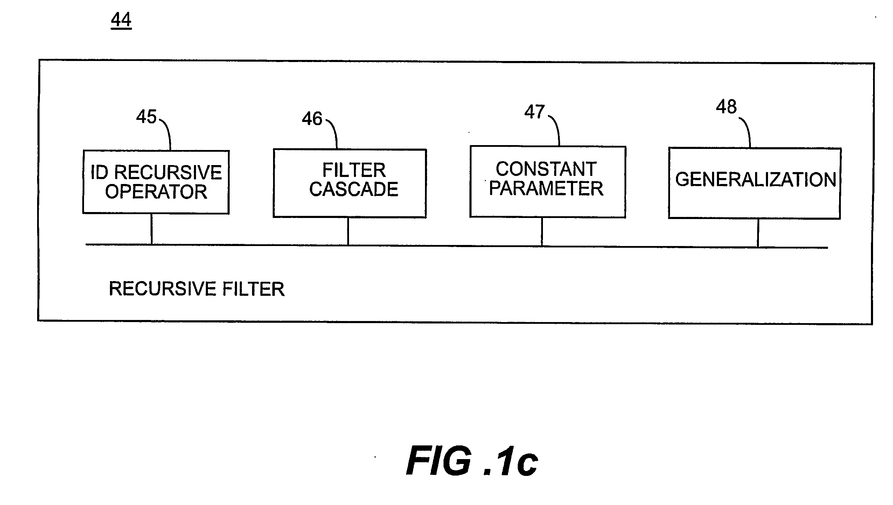

Figure 1c illustrates features of the recursive filter 44. The recursive filter 44 includes one-dimensional operator element 45, filter cascade element 46, constant parameter element 47, and 2-D generalization element 48. As will be explained later, these elements of the recursive filter 44 allow its use in the local statistics algorithm 40 to generate a robust envelop, or output *I*, having improved quality.

The recursive filter 44 is a two-dimensional (2D) extension of a signal processing IIR filters. The derivation of the recursive filter 44 can proceed according to several distinct stages. A first stage begins with a one-dimensional (1D) case. Considering a causal 1D direct convolution

$$(2) \qquad L_i = \sum_{n=0}^{N-1} S_{i-n} \cdot K_n ,$$

when N is large, the computational complexity of the direct convolution might be prohibitive. However, the general formulation of the casual 1D IIR filter is

$$(3) \qquad L_i = \sum_{n=0}^{N-1} S_{i-n} \cdot b_n + \sum_{n=1}^{n-1} L_{i-n} \cdot a_n ,$$

and the simplest recursive filter

$$(4) \qquad L_i = \alpha \cdot L_{i-1} + (1-\alpha) \cdot S_i ,$$

is equivalent to

$$(5) \qquad L_i = \sum_{n=0}^{\infty} S_{i-n} \cdot K_n, \text{ with } K_n = (1-\alpha) \cdot \alpha^n$$

where $K_n$ is an exponential kernel having an infinite support. The effective support is on the order of 1/$\alpha$. Unlike a direct formulation, in the IIR formulation the size of the effective support of the filter can be changed with no additional computations. Alternatively, IIR filters with a profile other than exponential can be designed.

When non-causal filters are required (as is the situation for images), $K_n = \dfrac{1-\alpha}{1+\alpha} \cdot \alpha^{|n|}$, $\forall n$, can be implemented as a sum of two recursive filters: a causal and an anti-causal filter. In this situation

$$(6) \qquad L_i^+ = \alpha \cdot L_{i-1} + (1-\alpha) \cdot S_1$$

$$L_i^- = \alpha \cdot L_{i+1} + (1-\alpha) \cdot S_{i+1} ,$$

and then

$$(7) \qquad L_i = \frac{1}{1+\alpha}\left(L_i^+ + L_i^-\right).$$

Image processing systems usually require 2D separable filters, i.e., filters for which $K(i,j) = K_x(i)\cdot K_y(j)$, which may be implemented by first filtering each row using $K_x$, and then filtering each column of the output using $K_y$. Each of $K_x$ and $K_y$ can be implemented by a filter exemplified by (7).

Given the two recursive filters (6), the next stage involves deriving a scheme for a robust 2D envelope version of the recursive filtering, beginning with forcing the envelope condition $L_i \geq S_i, \forall i$. This forcing step can be done directly on the recursive formulation (6) resulting in:

$$(8) \qquad L_i^+ = \max\{\alpha \cdot L_{i-1} + (1-\alpha)\cdot S_i, \ S_i\}$$

$$L_i^- = \max\{\alpha \cdot L_{i+1} + (1-\alpha)\cdot S_{i+1}, \ S_i\}$$

By construction $L_i^+ \geq S_i, \ L_i^- \geq S_i,$ and thus from (7) also, $L_i \geq S_i$.

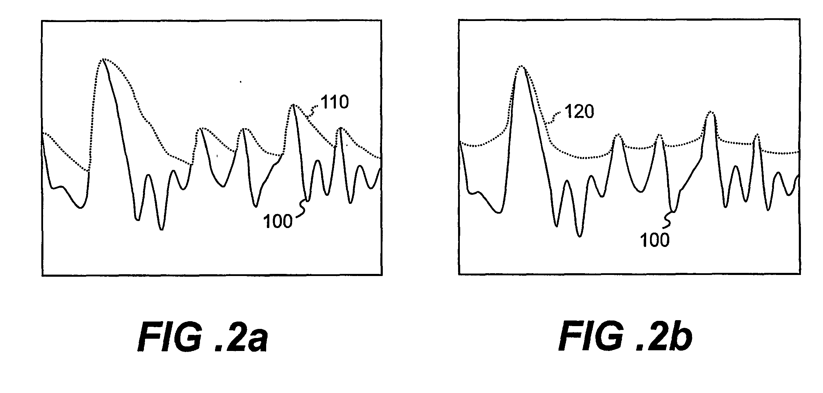

Figure 2a illustrates a signal $S$ 100, and its causal envelope $L_i^+$ 110. Figure 2b illustrates $S$ 100 and envelope $L$ 120, which portrays some undesirable characteristics around locations where the envelope limitation is being enforced. At those locations where the envelope limitation is enforced, the output $L$ 120 is almost identical to $S$ 100, and consequently the reflectance $R$ will be saturated.

To avoid saturation, instead of two parallel causal and anti-causal filters, a cascade of the same filters, namely:

$$(9) \qquad L_i^+ = \max\{\alpha \cdot L_{i-1} + (1-\alpha)\cdot S_i, \ S_i\}$$

$$L_i = \max\{\alpha \cdot L_{i+1}^+ + (1-\alpha)\cdot S_{i+1}, \ S_i\}$$

is used.

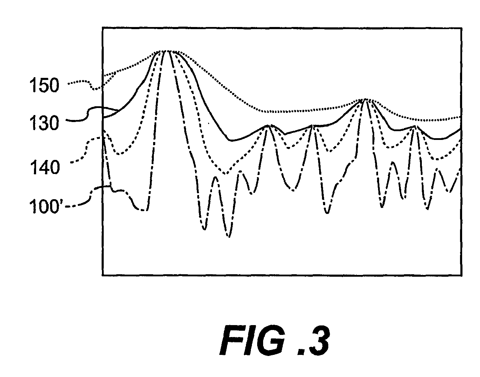

Figure 3 presents the signal $S$ 100, and a cascaded causal envelope $L$ 130 (from (9)), which is much more like an envelope. Figure 3 also presents two other envelopes 140 and 150, which are created using different $\alpha$ parameters. Lower $\alpha$ values correspond to "more elastic" (and thus lower) envelopes.

However, the envelope $L$ 130 has some disadvantages:

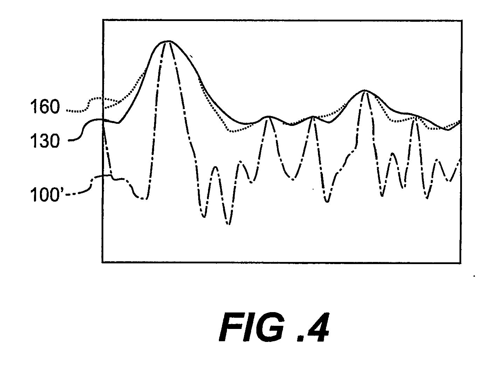

1. The envelope $L$ 130 is not symmetric, and flipping the input signal $S$ 100 will not result in a flipped envelope $L$. This asymmetry is shown in Figure 4, where the envelope 130 of the signal $S$ 100 does not match a flipped envelope $L'$ 160 of a flipped input signal $S'$.

2. A derivative discontinuity artifact exists in the valleys of the envelope $L$ 130. The discontinuity is more visible in more elastic envelopes (i.e., envelopes with lower $\alpha$ s). This artifact is less noticeable in images, especially when considering the parameter ranges used for the Retinex model.

3. Although parallel causal $L$ obtained by substituting (8) into (7) is not what is expected from an envelope, it is close to a condition found in robust envelopes. Specifically, the envelope $L$ "drops" at locations where the input signal $S$ has sharp discontinuities, and "floats" over small discontinuities in $S$. This "short cut robustness" is nevertheless less desirable relative to the alternative of the robust $L$ as will be detailed below.

Given the filter cascade (9), the envelopes can be made robust. That is, in locations where the input signal $S$ has sharp discontinuities, the envelope $L$ should have similar discontinuities, and in locations where the input signal $S$ has small discontinuities or is altogether smooth, the envelope $L$ should remain smooth and follow $S$ at a rate prescribed by $\alpha$.

Reformulating the above requirement in terms of recursive filters parameterized by $\alpha$ means that the envelope $L$ should have a constant $\alpha$ everywhere except at sharp discontinuities, where $\alpha$ should be smaller. Thus, $\alpha$ is a function of the local gradient of the input signal $S$. When the gradient is low, a new gradient-dependent parameter, $\alpha(\nabla S)$, should approximately obtain the original value $\alpha_o$, and when the gradient has a large negative value, $\alpha(\nabla S)$ should be smaller. However, when the gradient has large positive values, $\alpha(\nabla S)$ should not be small. In this case, discontinuities will usually occur due to the envelope requirement. Otherwise, when the envelope $L$ is higher than the input signal $S$, a smaller $\alpha$ value will bring the envelope $L$ down, creating a discontinuity that is inverted relative to the input $S$ (and is thus undesirable).

One way of making algorithms robust is by making constant parameters a function of the input signal processed by the algorithm. One such method is to make $\alpha$ a function of a local gradient $\nabla s$. The function returns a constant value of $\alpha_0$ for large $\nabla s$ values and the value of $\alpha$ decreases monotonically to 0 as $\nabla s$ decreases. As an illustrative example, a Huber influence function for $\alpha$ is:

$$(10) \quad \alpha(\nabla S) = \begin{cases} \alpha_0 & \nabla S \geq -\dfrac{1}{T} \\ \dfrac{\alpha_0}{\nabla S \cdot T} & \nabla S < -\dfrac{1}{T} \end{cases}$$

where T is a threshold value.

Using such a Huber influence function (10), the robust version of (7) is thus:

$$(11) \quad \begin{aligned} L_i^+ &= \max\{\alpha(\nabla S_i) \cdot L_{i-1} + (1 - \alpha(\nabla S_i)) \cdot S_i, \ S_i\} \\ L_i &= \max\{\alpha(-\nabla S_{i+1}) \cdot L_{i+1}^+ + (1 - \alpha(-\nabla S_{i+1})) \cdot S_{i+1}, \ S_i\} \end{aligned}$$

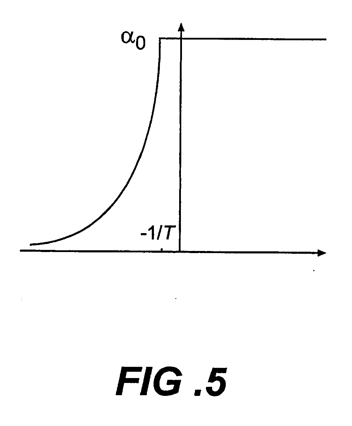

Figure 5 illustrates a Huber influence function.

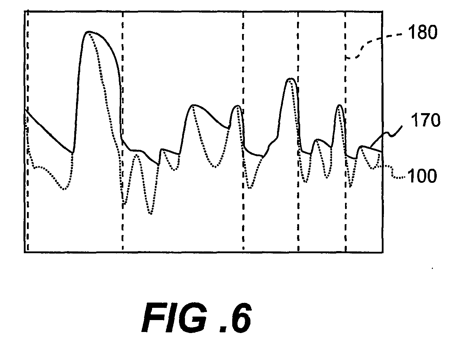

Figure 6 presents $L_i^+$ 170 of (11) and is a robust version of the envelope 110 of Figure 2a. Dotted vertical lines 180 indicate local minima of the gradient of the input signal $S$ 100, which are below the threshold $-1/T$ (10). In regions where the threshold T was not crossed, output $L$ 170 is very similar to the output $L$ 110 of Figure 2a Elsewhere, differences between $L$ 110 and $L$ 170 depend on the gradient of the input signal $S$ 100.

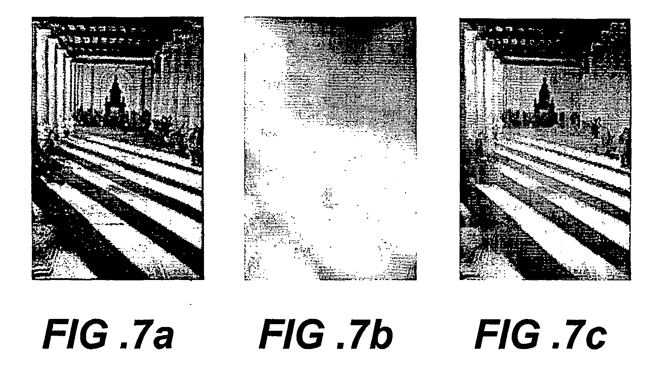

The last stage in deriving the robust recursive Retinex algorithm 40 involves generalizing recursive filters to robust envelopes by revisiting the generalization of linear recursive filters to 2D. Figures 7b and 7c are respectively, the non-robust and robust envelopes (separable application of (9) and (11)) of the input image in Figure 7a. The envelope required by the Retinex algorithm 40 is such that major structures such as shadows and highlights are preserved in the envelope and can thus be corrected for, but details are removed. Making the envelope "posterized" leaves the depth and details in the reflectance image. In that respect, the robust envelope 170 (see Figure 5) is much better than the non-robust envelope 110 (see Figure 2a).

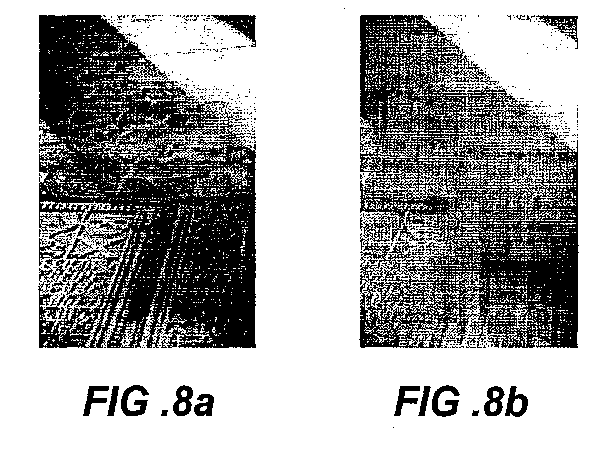

However, a closer look at the images reveals an inherent problem of the generalization to 2D. Figures 8a and 8b are a zoom in on the lower column shadow of the images in Figures 7a and 7c, respectively. As can bee seen in Figure 8b, the loss of detail of the robust envelope 170 is accompanied by artifacts in the Y direction.

One explanation for the artifacts (e.g., those shown in Figure 8b) is based on the way in which the 1D filter is applied to an image. Specifically, the 1D filter is applied to "rows" and "columns" of image pixels. In the Y direction, the 1D filter (i.e., a column filter) is applied along each of the image columns, and is independent of the information in nearby image columns. The non-robust envelope 110 is not affected by this problem since the X direction filter produces smooth outputs, which means that nearby columns of its output are similar. Combining this with the fact that similar inputs to the Y filter result in similar outputs, amounts to a smooth 2D output. Neither of the above "regularizing" features of the non-robust envelope is true for the robust envelope 170.

A further difference between the robust and the non-robust envelopes can be seen by considering the recursive filter 40 in terms of information flow between pixel locations in the image. In the non-robust case, for each recursive pass (i.e., a forward pass and a backward pass in each dimension X and Y), information flows with the recursion along a row or column. In a 1D filter, every pixel receives information from pixels preceding that pixel (during the forward pass) and from pixels following that pixel (during a backward pass). In a 2D filter, information flows along pixel rows and then along pixel columns. This means that with the 2D filter, the Y filter operates on the results of the X filter). Since the Y (column) filter operates on the result of the X (row) filter, in the 2D filter, every pixel "has access" to information from all the other pixels in the image. However, the information from one pixel (a source pixel) to another pixel (a destination pixel) flows in a single predetermined path - first along the row of the source pixel, and then along the column of the destination pixel.

In the robust case, information does not flow freely. Instead, information is blocked at locations where the gradient of the input signal $S$ is below a threshold. In the 1D robust case, this form of information blockage is not a problem because information from across an edge is not desired. However, the 2D robust case, two pixels might be in a same segment (i.e., not across an edge from each other), even though the row + column path connecting the two pixels might cross edges. Thus any flow blockage on a single path connecting two pixels could prevent the two pixels from considering each other, when in fact the two pixels should consider each other, as long as there is even a single unblocked path connecting the two pixels.

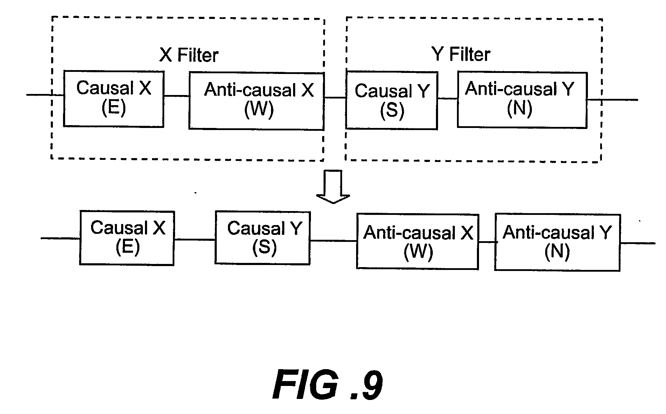

A resolution to the problem of blocked inter-pixel information flow, using the cascaded recursive filters (7), involves dimension interleaving, which is shown in block diagram form in Figure 9. In Figure 9, a compass notation (i.e., east, west, south, north) refers to different causal/anti-causal and Y/X directions. For example, the first line in Figure 9 is an E, W, S, N flow, whereas the second line is an E, S, W, N flow.

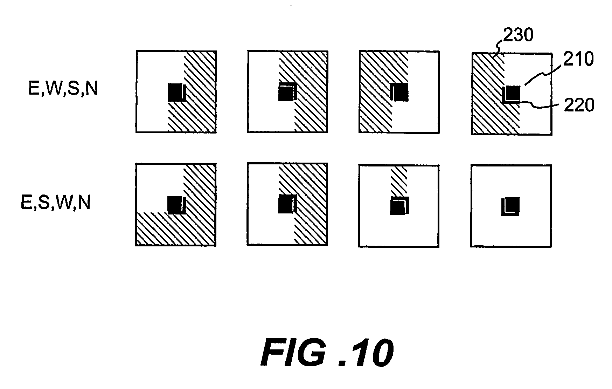

Figure 10 provides another mechanism for illustrating the blocked inter-pixel information flow problem and evaluating alternatives. In each of eight flow diagrams in Figure 10, a center zone 210 represents information and bold lines 220 represent information flow barriers. Letting the information flow in a direction sequence detailed on the left of each row of diagrams results in the information being barred from a zone represented by hatched zone 230. Each of the four diagrams on the first row in Figure 10 is thus the result of an E, W, S, N flow sequence, whereas each of the diagrams on the second row is the result of an E, S, W, N flow sequence.

Though somewhat simplistic, the information flow barriers illustrated in Figure 10 are common in natural images. While helpful, using the interleaved sequence (E, S, W, N) as opposed to the original sequence (E, W, S, N) is not a full solution to the inter-pixel information flow problem. Alternatives exist; however, the alternatives come with increased computational cost. For example, one such alternative involves repetition: e.g., "E, S, W, N, E," and "E, S, W, N, E, S."

Another alternative is to turn the recursive passes into "intrinsic" 2D passes, i.e., instead of getting information from a single pixel, each pixel gets information from two pixels, one in each dimension. For example, for one such 2D pass, denoted by SE in accordance with the compass notation:

$$(12) \quad L_{i,j}^{SE} = \max\{\alpha(\nabla_x S) \cdot L_{i-1,j} + (1 - \alpha(\nabla_x S)) \cdot S_{i,j}, \\ \alpha(\nabla_y S) \cdot L_{i,j-1} + (1 - \alpha(\nabla_y S)) \cdot S_{i,j}, \quad S_i\}$$

Four such passes can be cascaded to create a sequence, such as "SE, SW, NW, NE.". For example

$$L_{i,j}^{NE} = \max\{\alpha(\nabla_x S) \cdot L_{i-1,j} + (1 - \alpha(\nabla_x S)) \cdot S_{i,j}, \\ \alpha(-\nabla_y S) \cdot L_{i,j+1} + (1 - \alpha(-\nabla_y S)) \cdot S_{i,j}, \quad S_i\}.$$

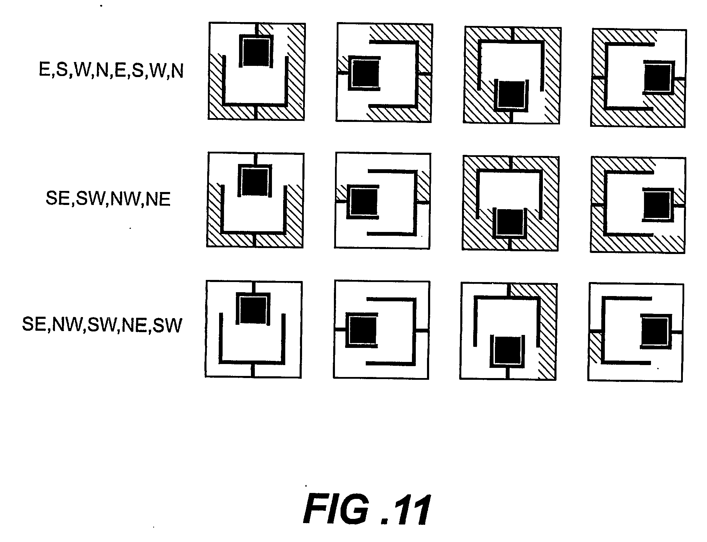

Figure 11 illustrates the information flow of some alternatives in a more complex information flow barrier system. Information flow artifacts can be evaluated both in terms of quality and computational complexity. For example, the eight 1D passes described in the first row of Figure 11 are computationally more complex than the four non interleaved 2D passes in the second row of Figure 11. Furthermore, according to the barrier model of Figure 11, the eight 1D passes will usually result in more artifacts. In general, 2D schemes perform better than 1D schemes on the trade-off between image quality and computational complexity.

Artifacts such as those illustrated in Figures 10 and 11 are visible in images with corresponding edge structures. However, since information barriers are not absolute, artifacts in complex schemes are usually fuzzy. The discussion that follows uses the five interleaved 2D pass scheme described in the third row of Figure 11.

Having defined a robust recursive envelope, application of the envelope requires consideration of scale invariance. Specifically, given a first image and a second image, with the images of different sizes, i.e., the second image being a decimated version of the first image, is an envelope of the second image approximately equal to a decimation of the envelope of the first image?

Scale invariance is important for two reasons: First, the Retinex model is scale invariant, and relates only to the composition of colors in the visible field of view and not to their scale. More important however, is the need to find stable parameters for the Retinex algorithm. Stable parameters means a set of parameters that will perform reasonably well for all natural images. While examining images at different scales, a good set of parameters for small images can normally be determined. However, tuning the parameters becomes harder as images grow larger, and is practically impossible above a certain scale. However, in a scale invariant version of the Retinex algorithm 40 (described below), parameters are stable, and the Retinex algorithm 40 performs equally well at all scales.

The above-described recursive operators are scale dependent by virtue of three components relating to the scale of the image (or more accurately the size of image's pixels):

The parameter $\alpha$ determines the size of the LPF in pixels.

The recursion is defined on pixels.

The gradient $\nabla s$ is defined on pixels

To make the Retinex algorithm 40 scale independent, a robust exponent $\alpha(\nabla s)$ is defined. The new definition results in the desired scale independent robust envelopes, with the exception of sporadic artifacts due to rare configurations of high-scale details in the input image.

The robust exponent $\alpha(\nabla s)$ is a function of the local gradient of the image $S$, such as the Huber function defined in (10) and shown in Figure 5. The robust exponent $\alpha(\nabla s)$ is then modified to be scale independent.

The first step in making the robust exponent $\alpha (\nabla s)$ scale independent involves removing parameter dimensionality. As described above the parameter $\alpha_0$, of $\alpha(\nabla s)$ in (10), was previously set to correspond to a prescribed effective kernel support of the original recursive linear filter (4). To make $\alpha_0$ scale invariant in the linear case, the kernel must also be scale invariant. To be scale invariant, the kernel has to change size with the input image $S$. Therefore the value $K_j$ of the kernel at the $j^{th}$ location will be a function of the size, N, of the image $S$. For the kernel to be scale invariant, a coordinate j is scaled by N. In other words, a new kernel, $K_{j/N}$, is defined such that a new kernel, $K_{j/N}$ is equal to the original $K_j$ for some desired image size $N_0$. Since the kernels are Laplacian

$$K_J = C \cdot \alpha_0^{|j|}, \quad K_{j/N} = C_N \cdot \alpha_0^{\frac{N_0 \cdot |j|}{N}} = C_N \cdot \alpha_0(N)^{|j|}, \text{ with}$$

$$(13) \quad \alpha_0(N) = \sqrt[N]{\alpha_0^{N_0}}$$

where $N_o$ is some reference image size (in an example, $N_0$=256).

A second step in making the robust exponent $\alpha (\nabla s)$ scale independent involves removing the recursion dimensionality. Assuming, for example, a 2:1 decimation rate, an edge with a two-pixel interface transition in a high-resolution image has a single-pixel interface transition in a low-resolution image. In the low-resolution image, the filtering recursion crosses the same edge in a single step rather than in two consecutive steps as in the high-resolution image. However, between the high- and low-resolution images the total filtering effect has to be the same. If $\alpha(\nabla S)$ were a constant, as in a linear case, then the above would be true by virtue of removing the parameter dimensionality. However, the robustness of the recursive filter 44, caused by the variation in $\alpha(\nabla S)$, requires further consideration in order to gain scale invariance in regions where $\alpha(\nabla S)$ is not constant.

As example, a hypothetical edge is stretched over three pixels in the high-resolution image, thereby inducing gradients $\nabla x_i^1 = g_1$ and $\nabla x_{i+1}^1 = g_2$. The same edge is stretched over two pixels in the low-resolution image, inducing a gradient $\nabla x_{i/2}^2 = g_o$.

Thus,

$$(14) \quad g_0 = g_1 + g_2.$$

Assuming in addition that all edges have passed the threshold (i.e. $g_1$, $g_2\langle$-$T$), scale invariance requires

$$(15) \quad \alpha(g_0) = \alpha(g_1) \cdot \alpha(g_2).$$

From (14) and (15) the robust exponent function should itself have an exponential profile

$$(16) \quad \alpha(g) = K \cdot e^{\beta \cdot g},$$

and, since $\alpha:(0)=\alpha_0$, then $K=\alpha_0$. The remaining parameter, $\beta$, parameterizes the desired degree of robustness, starting from non-robust, with $\beta = 0$, with $\beta$ increasing as the desired degree of robustness increases.

A third step in making the robust exponent $\alpha(\nabla s)$ scale independent involves selecting a threshold T. This step involves use of a rule of thumb that edges with total variation of less than ten gray levels (in the standard gray scale [0,255]) are detail edges, and regions surrounded by edges with larger total variation represent illumination or object edges.

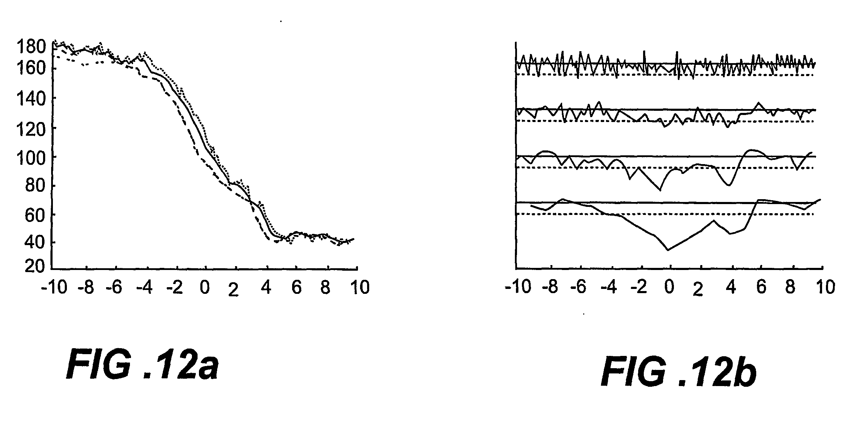

What makes the above rule scale independent is the use of the term "total variation" instead of gradient. Considering the example illustrated in Figure 12, a cross section of an edge is plotted in Figure 12a at four scales (the X axis is in coarse scale units). Figure 12b illustrates gradient functions of the four cross sections, where for each scale the solid straight line is the corresponding X axis, and the dotted line is a T = -5 threshold. At larger scales, the edge stretches over a larger number of pixels, and consequently the gradient at each location is smaller. Due to fine details or noise, the edges become dominant in the gradient function, whereas the gradient at the real edge will drop below any threshold. The total variation of the edge (the difference between its left and right sides in Figure 12a) is, however, constant throughout the scale space, and thus scale independent.

The above-described process for determining the relevance of an edge to robustness according to the total variation of the edge rather than the local gradient of the edge is conditioned on the ability of the human visual system to tell an edge from other structures (e.g., light gradations such as those across columns in Figure 7a). Empirical observations for the Retinex model show that using a threshold on the gradient of natural images performed consistently well at small scales (approximately 256 x 256 pixels).

A span of two pixels in scale $N_0$ = 256 is a good basis for a practical definition of total variation in a Retinex model. However, the gradient cannot simply be replaced with a gradient at scale $N_0$ if the edge details of the original image scale $N \rangle N_0$ are to be preserved. Instead, the base scale $N_0$ should be used only in the threshold. This requirement leads to the definition of two different gradients, a standard pixel based gradient $\nabla S$, and a scaled gradient $\nabla_N S$.

$$(17) \quad \begin{aligned} \nabla S &= S(i) - S(i-1) \\ \nabla_N S &= S\left(i + \Delta_N^+\right) - S\left(i - \Delta_N^-\right) \end{aligned}$$

where

$$(18) \quad \Delta_N^+ + \Delta_N^- = \left\lfloor N / N_0 \right\rfloor,$$

and $\Delta_N^+ + 1 \geq \Delta_N^- \geq \Delta_N^+$.

Considering also (13) and (16), the scale independent robust exponent is

$$(19) \quad \alpha\left(\nabla S, \nabla_N S, N\right) = \begin{cases} \sqrt[N]{\alpha_0^{N_0}} & \nabla_N S \geq -T \\ \sqrt[N]{\alpha_0^{N_0}} \cdot e^{\beta \cdot \min\{\nabla S, 0\}} & \nabla_N S \langle -T \end{cases}.$$

Although all the components of the robust exponent in (19) have been modified to make the Retinex algorithm 40 scale independent, the Retinex algorithm 40 is not strictly scale independent due to small-scale details. That is, scale independence has been mainly achieved by adopting a base scale $(N_0 = 25\,6)$. To make the Retinex algorithm 40 strictly scale independent, all the details above the base scale would have to be ignored. However, ignoring details above the base scale could ruin image quality. Overcoming this dilemma involves analyzing cases where the scale independent recursion fails and eliminating only those small-scale details necessary to eliminate the scale artifacts.

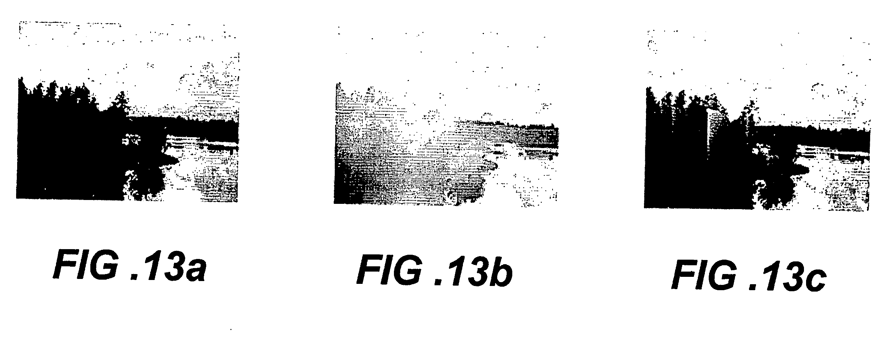

Figure 13 shows a failure of the scale independent recursion. A segment of an image appears in Figure 13a and the proposed scale-invariant output in Figure 13b. The output of the first 2D pass (12), shown in Figure 13c, practically points at the local origin of the artifacts.

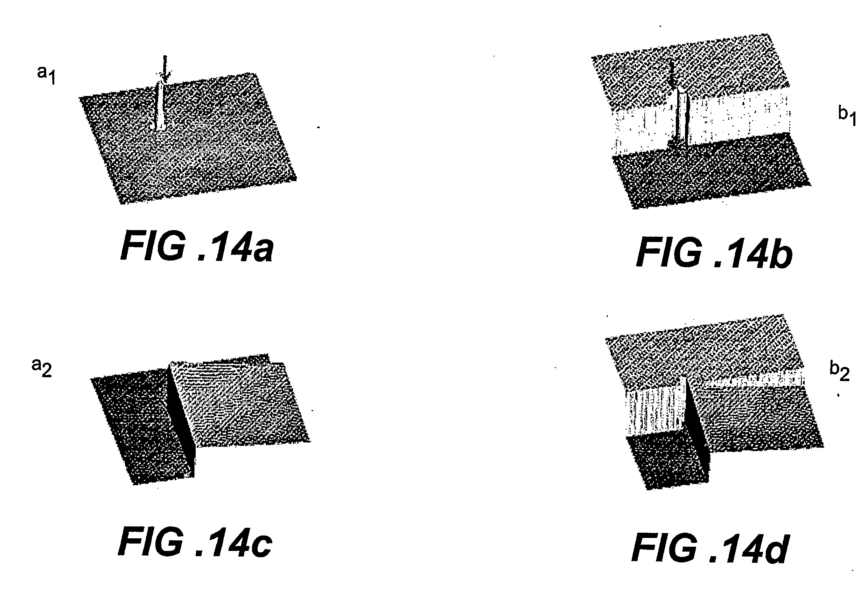

Analyzing the origins of the artifacts leads to two problematic high-scale configurations, the roots of which can be traced to the definition (17) of the scaled gradient $\nabla_N S$. Referring to Figure 14, a bright-dot configuration in Figure 14a is a bright spot whose gray-difference from background should have defined the bright spot as an edge but is not recognized as an edge since the bright spot is missed altogether by $\nabla_N S$. The arrow points at a pixel (to the right of the dot) where the scaled gradient fails to detect the gradient (there is a symmetric location just in front of the dot). The dots mark the locations $\Delta_-$ and $\Delta_+$ (from (17)) according to which $\nabla_N S = 0$. Consequently, the bright dot's brightness information flows freely to fill the dark segment as in Figure 14b. The dark-canyon configuration in Figure 14c is essentially the dual of the bright-dot configuration.

To solve both problems, the dual morphological grayscale filters opening and closing is used. Considering the image as a surface, a "close" filter literally closes all the holes and scratches into which a structuring element cannot penetrate, whereas "open" is the dual operation. Thus, using a K x K flat structuring element, where

$$(20) \quad K = \left\lfloor \frac{N}{N_0} \right\rfloor$$

"open" eliminates bright-dot configurations, and "close" eliminates dark-canyons.

However, replacing the input image by a filtered version yields an envelope of the filtered version, which is not necessarily an envelope of the input. To resolve this problem, the Retinex algorithm 40 can be augmented by a maximum operation between the output and the input, thereby ensuring the envelope condition.

Thus, if the input image $S$ is first filtered by the appropriate open and close filters, the above described envelope filters can be applied safely.

An alternative implementation of the total variation concept is a different definition of the gradient $\nabla_N S$ in (19) (different than the original definition in (17)).

$$\nabla_N S = \sum_{i=\Delta_N^- + 1}^{\Delta_N^+} \left| S(i+j) - S(i+j-1) \right|$$

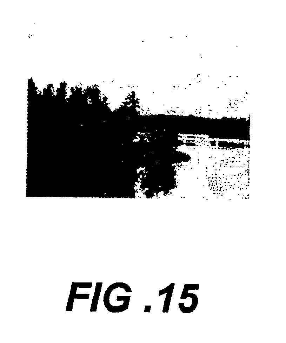

The use of this gradient removes the need to perform the pre-filtering of open and close. Figure 15 shows the scale independent robust envelope obtained by the Retinex algorithm 40.

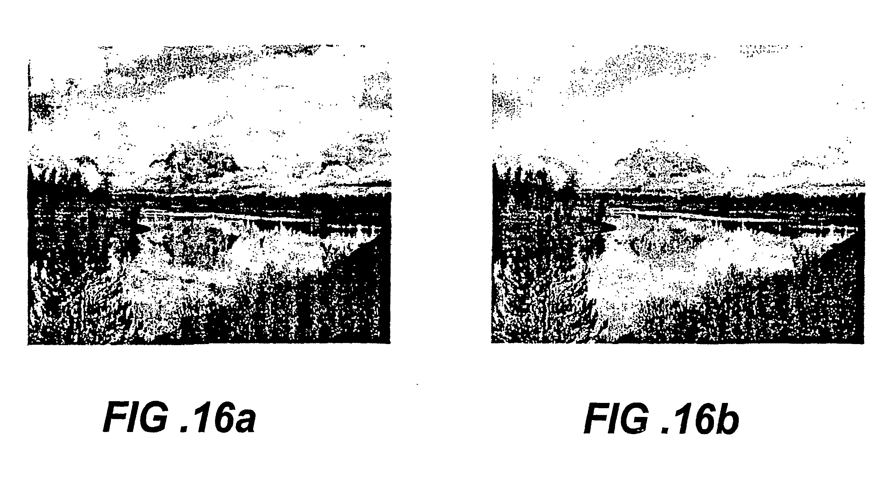

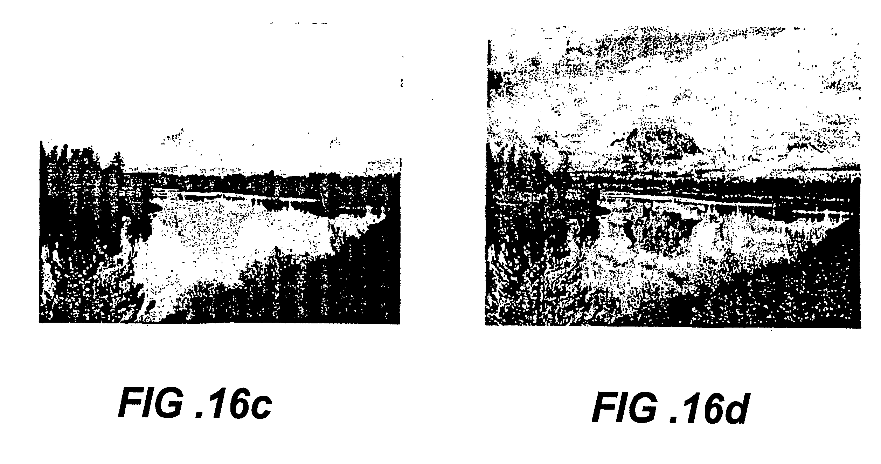

Referring to Figure 16, an example of an application of the robust, recursive Retinex algorithm 40 is shown. In the application of the robust, recursive Retinex algorithm 40 shown in Figure 1b, the details and parameters of the algorithm, as well as those of the corresponding Retinex correction, are:

| | |
|---|---|
| Retinex-Pre: | S = max{R,G,B} (20). |
| Prefilter: | Morphological Opening followed by morphological Closing (42). |
| Recursive Filter: | NW, SE, SW, NE, NW (44). |
| | $\alpha_0$ : 0.945 |
| | $N_0$: 200 |
| | β: 0.15 |
| | T: 5 |
| PostFilter: | Maximum (54) |
| Retinex-Post: {R,G,B} | 255 {R,G,B}/L$^{(1-1/y)}$ (60) |

Figure 16 presents an input image $S$ (Figure 16a), its gamma correction in Figure 16b, the robust envelope obtained by the Retinex algorithm in Figure 16c, and the resulting Retinex correction in Figure 16d. The gamma correction of Figure 16b was tuned to result in the same general brightness of Figure 16d. As can be seen, the details in the Retinex output are significantly more contrasted.

The benefits of the Retinex algorithm 40 are expressed in the envelope's ability to be both flat where contrast has to be maintained, and to follow the input image edges, where the contrast can be traded-off for reduction in the overall dynamic range. This image is especially difficult in that aspect, due to the fractal interface between the shaded foreground and the illuminated background.

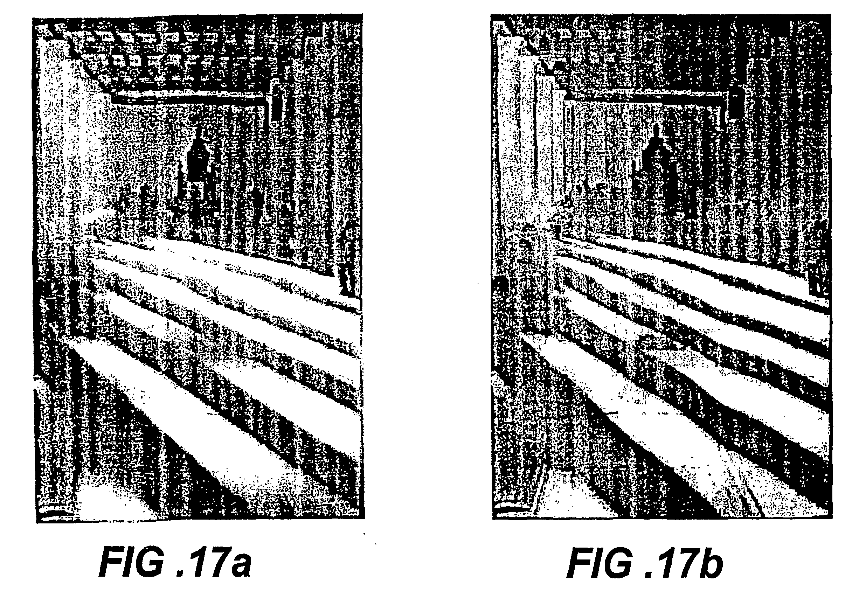

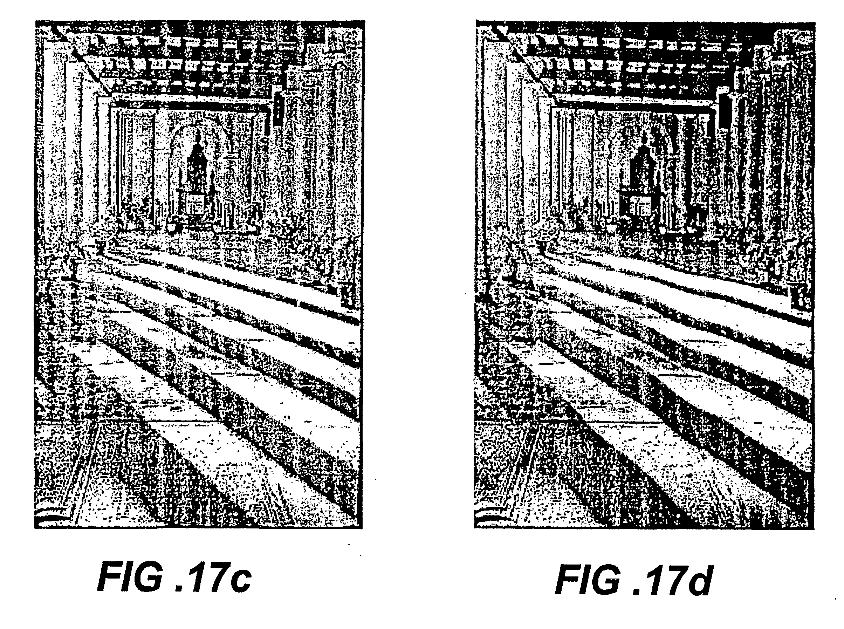

Figure 17 shows a comparison the robust recursive envelope filters of the Retinex algorithm 40 to an alternative Retinex method. A pyramidal solution to a variational formulation of the robust envelope extraction problem has linear complexity (see Table 1 above). However, due to the iterative nature of the differential equation solved in each of the pyramidal layers, the constant is relatively large. For images of 1M pixels, the execution time for the Retinex algorithm 40 is about half that of the pyramidal method.

Figure 17 shows the envelopes and the corresponding Retinex enhancements for the Retinex algorithm 40 and the pyramidal Retinex, side by side. In both methods, envelopes are, as required, smooth and robust. Nevertheless, differences exist between the methods.

The pyramidal Retinex is scale invariant in the global sense. That is, the nature of the envelope image does not depend on the size of the input image. However, the pyramidal Retinex algorithm is not locally scale invariant, meaning that features of different size in the image are treated differently, and specifically, the smaller a feature is, the more the feature is treated as detail rather than as a feature. The image in Figure 17 is an example where the illumination for each of the column shadows is corrected differently according to its width.

The robust recursive filter is locally scale invariant up to a certain "threshold scale." The threshold scale is dependent on the size of the image, thus maintaining the global scale invariance of the algorithm. Whereas in scales that are clearly above the threshold this seems as an advantage, in features whose scales are around the threshold scale this might introduce some artifacts, e.g., in the sporadic details visible on the highlighted floor in Figure 17b.

In addition, an "information-flow" type artifact (see Figure 9) is marginally visible in the main shadow of Figure 17b. Furthermore, artifacts due to the gray threshold, T, are visible on the profile of the highlighted columns, where the intensity profile has a gradually increasing slope, which is bound to break the threshold at some point or the other. The more depth exists in the envelope the less depth is evident in the enhanced image. Thus, the highlighted columns, which broke threshold T, have a reduced three-dimensional (3D) sense compared to the pyramidal enhancement, whereas the other columns have a better 3D sense due to their flatter envelope.

## Claims

1. An apparatus for processing color images, comprising:

   an input processor (20), wherein an image is received;
   an output processor (60); and
   a Retinex-type processor, **characterized by**:

      a local statistics processor (30), comprising a cascaded recursive filter, and
      a point operation processor (55) correcting pixels of the input image according to corresponding pixel values in the local statistics processor.

2. The apparatus of claim 1, wherein the cascaded recursive filter is a cascade of filters of the form:

$$L_{i,j}^{SE} = \max\left\{\alpha(\nabla_x S)\cdot L_{i-1,j} + (1-\alpha(\nabla_x S))\cdot S_{i,j},\ \alpha(\nabla_y S)\cdot L_{i,j-1} + (1-\alpha(\nabla_y S))\cdot S_{i,j},\ S_i\right\}$$

   whereby SE above may be replaced by one of N, S, E, W, NE, NW, or SW according to standard compass notations corresponding to a direction of information flow.

3. The apparatus of claim 2, wherein a parameter $\alpha$ of the cascaded recursive filter is a function of an input signal of the image.

4. The apparatus of claim 3, wherein the parameter $\alpha$ is a function of a local gradient $\nabla s$, which returns a constant value $\alpha_0$ for large $\nabla s$ values and decreases monotonically to zero as $\nabla s$ decreases.

5. The apparatus of claim 4, wherein $\alpha(\nabla s)$ is scale independent.

6. The apparatus of claim 5, wherein,

$$\alpha(\nabla S, \nabla_N S, N) = \begin{cases} \sqrt[N]{\alpha_0^{N_0}} & \nabla_N S \geq -T \\ \sqrt[N]{\alpha_0^{N_0}} \cdot e^{\beta\cdot\min\{\nabla S, 0\}} & \nabla_N S \langle -T \end{cases}$$

   wherein N is a size of the input image S, wherein $\nabla_N S$ is a scaled gradient, wherein T is a threshold value, and wherein $\beta$ is a constant parameter.

7. The apparatus of claim 6, wherein the scaled gradient of the image is

$$\nabla_N S = \sum_{l=\Delta_N^-+1}^{\Delta_N^+} \left| S(i+j) - S(i+j-1) \right|.$$

8. The apparatus of claim 1, further comprising an open/close prefilter (42), and a post processor performing a maximum operation between the input image and the output image, thereby ensuring the envelope condition.

9. A robust recursive envelope operator for fast Retinex processing, comprising:

   a cascaded recursive filter (44), comprising:

$$L_{i,j}^{xx} = \max\left\{\alpha(\nabla_x S)\cdot L_{i-1,j} + \left(1 - \alpha(\nabla_x S)\right)\cdot S_{i,j},\right.$$
$$\left.\alpha(\nabla_y S)\cdot L_{i,j-1} + \left(1 - \alpha(\nabla_y S)\right)\cdot S_{i,j},\ \ S_i\right\}'$$

   wherein $\alpha(\nabla s)$ comprises a scale independent parameter, wherein xx comprises a compass notation, and wherein the robust recursive envelope operator processes an input image signal S.

10. A method for processing an input image S, comprising:

   applying an open/close prefilter to the image S (42);
   applying a Retinex-type processing using a cascaded recursive filter to the image S (43); and
   applying a post
   processing performing a maximum operation between the input image and the output image, thereby ensuring
   the envelope condition.

**Patentansprüche**

1. Eine Vorrichtung zum Verarbeiten von Farbbildern, die folgende Merkmale aufweist:

   einen Eingangsprozessor (20), bei dem ein Bild empfangen wird;
   einen Ausgangsprozessor (60); und
   einen Prozessor vom Retinex-Typ, **gekennzeichnet durch**:

      einen Lokalstatistikprozessor (30), der ein kaskadiertes rekursives Filter aufweist, und
      einen Punktoperationsprozessor (55), der Pixel des Eingangsbilds gemäß entsprechender Pixelwerte in dem Lokalstatistikprozessor korrigiert.

2. Die Vorrichtung gemäß Anspruch 1, bei der das kaskadierte rekursive Filter eine Kaskade von Filtern der folgenden Form ist:

$$L_{i,j}^{SE} = \max\left\{\alpha(\nabla_x S)\cdot L_{i-1,j} + \left(1 - \alpha(\nabla_x S)\right)\cdot S_{i,j},\right.$$
$$\left.\alpha(\nabla_y S)\cdot L_{i,j-1} + \left(1 - \alpha(\nabla_y S)\right)\cdot S_{i,j}, S_i\right\}'$$

   wodurch SE oben gemäß Standardkompassschreibweisen entsprechend einer Richtung eines Informationsflusses durch eines von N, S, E, W, NE, NW oder SW ersetzt werden kann.

**3.** Die Vorrichtung gemäß Anspruch 2, bei der ein Parameter $\alpha$ des kaskadierten rekursiven Filters eine Funktion eines Eingangssignals des Bilds ist.

**4.** Die Vorrichtung gemäß Anspruch 3, bei der der Parameter $\alpha$ eine Funktion eines lokalen Gradienten $\nabla s$ ist, der einen konstanten Wert $\alpha_0$ für große Werte von $\nabla s$ ergibt und sich monoton auf Null verringert, wenn sich $\nabla s$ verringert.

**5.** Die Vorrichtung gemäß Anspruch 4, bei der $\alpha(\nabla s)$ skalenunabhängig ist.

**6.** Die Vorrichtung gemäß Anspruch 5, bei der gilt

$$\alpha\left(\nabla S, \nabla_N S, N\right) = \begin{cases} \sqrt[N]{\alpha_0^{N_0}} & \nabla_N S \geq -T \\ \sqrt[N]{\alpha_0^{N_n}} \cdot e^{\beta \cdot \min\{\nabla S, 0\}} & \nabla_N S < -T \end{cases},$$

wobei N eine Größe des Eingangsbilds S ist, wobei $\nabla_N S$ ein skalierter Gradient ist, wobei T ein Schwellenwert ist und wobei $\beta$ ein konstanter Parameter ist.

**7.** Die Vorrichtung gemäß Anspruch 6, bei der der skalierte Gradient des Bildes

$$\nabla_N S = \sum_{i = \Delta_N^- + 1}^{\Delta_N^+} \left| S(i + j) - S(i + j - 1) \right|$$

lautet.

**8.** Die Vorrichtung gemäß Anspruch 1, die ferner ein Offen/Geschlossen-Vorfilter (42) und einen Postprozessor aufweist, der eine Maximumoperation zwischen dem Eingangsbild und dem Ausgangsbild durchführt, wodurch die Hüllkurvenbedingung sichergestellt wird.

**9.** Ein robuster rekursiver Hüllkurvenoperator für eine schnelle Retinex-Verarbeitung, der folgende Merkmale aufweist:

ein kaskadiertes rekursives Filter (44), das folgende Merkmale aufweist:

$$L_{i,j}^{xx} = \max\left\{\alpha\left(\nabla_x S\right) \cdot L_{i-1,j} + \left(1 - \alpha\left(\nabla_x S\right)\right) \cdot S_{i,j},\right.$$

$$\left. \alpha\left(\nabla_y S\right) \cdot L_{i,j-1} + \left(1 - \alpha\left(\nabla_y S\right)\right) \cdot S_{i,j}, S_i\right\}$$

wobei $\alpha(\nabla s)$ einen skalenunabhängigen Parameter aufweist, wobei xx eine Kompassschreibweise aufweist und wobei der robuste rekursive Hüllkurvenoperator ein Eingangsbildsignal S verarbeitet.

**10.** Ein Verfahren zum Verarbeiten eines Eingangsbilds S, das folgende Schritte aufweist:

Anwenden eines Offen/Geschlossen-Vorfilters auf das Bild S (42);
Anwenden einer Verarbeitung vom Retinex-Typ unter Verwendung eines kaskadierten rekursiven Filters auf das Bild S (43); und
Anwenden einer Nachverarbeitung, die eine Maximumoperation zwischen dem Eingangsbild und dem Ausgangsbild durchführt, wodurch die Hüllkurvenbedingung sichergestellt wird.

## Revendications

**1.** Appareil pour traiter des images en couleur, comprenant :

un processeur d'entrée (20), dans lequel une image est reçu ;
un processeur de sortie (60) ; et
un processeur de type Retinex **caractérisé par** :

un processeur de statistiques local (30), comprenant un filtre récursif en cascade, et
un processeur d'opération de point (55) corrigeant des pixels de l'image d'entrée selon des valeurs de pixel correspondantes dans le processeur de statistiques local.

**2.** Appareil selon la revendication 1, dans lequel le filtre récursif en cascade est une cascade de filtres de la forme :

$$L_{i,j}^{SE} = \max \left\{ \alpha(\nabla_x S) \cdot L_{i-1,j} + (1-\alpha(\nabla_x S)) \cdot S_{i,j}, \\ \alpha(\nabla_y S) \cdot L_{i,j-1} + (1-\alpha(\nabla_y S)) \cdot S_{i,j}, \quad S_i \right\},$$

ce qui entraîne que SE ci-dessus peut être remplacé par l'un de N, S, E, O, NE, NO ou SO selon des notations de boussole classiques correspondant à une direction de flux d'informations.

**3.** Appareil selon la revendication 2, dans lequel un paramètre $\alpha$ du filtre récursif en cascade est une fonction d'un signal d'entrée de l'image.

**4.** Appareil selon la revendication 3, dans lequel le paramètre $\alpha$ est une fonction d'un gradient local $\nabla s$, qui retourne une valeur constante $\alpha_0$ pour des valeurs $\nabla s$ importantes et diminue de manière monotone vers zéro lorsque $\nabla s$ diminue.

**5.** Appareil selon la revendication 4, dans lequel $\alpha(\nabla s)$ est indépendant de l'échelle.

**6.** Appareil selon la revendication 5, dans lequel,

$$\alpha(\nabla S, \nabla_N S, N) = \begin{cases} \sqrt[N]{\alpha_0^{N_0}} & \nabla_N S \geq -T \\ \sqrt[N]{\alpha_0^{N_0}} \cdot e^{\beta \cdot \min\{\nabla S, 0\}}, & \nabla_N S < -T \end{cases}$$

où N est une taille de l'image d'entrée S, dans lequel $\nabla_N S$ est un gradient à l'échelle, dans lequel T est une valeur de seuil et dans lequel $\beta$ est un paramètre constant.

**7.** Appareil selon la revendication 6, dans lequel le gradient à l'échelle de l'image est

$$\nabla_N S = \sum_{i=\Delta_N^- + 1}^{\Delta_N^+} \left| S(i+j) - S(i+j-1) \right| \cdot$$

**8.** Appareil selon la revendication 1, comprenant en outre un filtre préalable d'ouverture/de fermeture (42) et un processeur ultérieur réalisant une opération de maximum entre l'image d'entrée et l'image de sortie, assurant ainsi la condition d'enveloppe.

**9.** Opérateur d'enveloppe récursif et robuste pour un traitement de Retinex rapide, comprenant :

un filtre récursif en cascade (44) comprenant :

$$L_{i,j}^{xx} = \max\left\{\alpha(\nabla_x S)\cdot L_{i-1,j} + (1-\alpha(\nabla_x S))\cdot S_{i,j},\right.$$
$$\left.\alpha(\nabla_y S)\cdot L_{i,j-1} + (1-\alpha(\nabla_y S))\cdot S_{i,j}, \quad S_i\right\},$$

où $\alpha(\nabla s)$ comprend un paramètre indépendant de l'échelle, dans lequel xx comprend une notation de boussole et dans lequel l'opérateur d'enveloppe récursif et robuste traite un signal d'image d'entrée S.

**10.** Procédé pour traiter une image d'entrée S, comprenant :

l'application d'un filtre préalable d'ouverture/ de fermeture sur l'image S (42) ;
l'application d'un traitement de type Retinex en utilisant un filtre récursif en cascade sur l'image S (43) ; et
l'application d'un traitement ultérieur en réalisant une opération de maximum entre l'image d'entrée et l'image de sortie, assurant ainsi la condition d'enveloppe.

**FIG .1a**

EP 1 668 593 B1

40

42

PREFILTER
(OPEN/CLOSE)

43

RECURSIVE FILTER
PROCESSOR

RECURSIVE
FILTER

44

54

POST FILTER
(MAX OUT)

*FIG .1b*

EP 1 668 593 B1

44

| | | | |
|---|---|---|---|
| 45 | 46 | 47 | 48 |
| ID RECURSIVE OPERATOR | FILTER CASCADE | CONSTANT PARAMETER | GENERALIZATION |

RECURSIVE FILTER

# FIG .1c

FIG.2b

FIG.2a

*FIG .3*

*FIG .4*

*FIG. 5*

**FIG .6**

FIG.7a   FIG.7b   FIG.7c

*FIG .8b*

*FIG .8a*

EP 1 668 593 B1

**FIG .9**

E,W,S,N

E,S,W,N

*FIG .10*

EP 1 668 593 B1

E,S,W,N,E,S,W,N

SE,SW,NW,NE

SE,NW,SW,NE,SW

*FIG .11*

**FIG .12a**

**FIG .12b**

FIG.13c

FIG.13b

FIG.13a

FIG .14b

FIG .14a

FIG .14d

FIG .14c

**FIG .15**

**FIG .16a**

**FIG .16b**

EP 1 668 593 B1

FIG .16d

FIG .16c

FIG .17b

FIG .17a

*FIG .17d*

*FIG .17c*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02089062 A2

**Non-patent literature cited in the description**

- **EDWIN LAND.** An Alternative Technique for the Computation of the Designator in the Retinex Theory of Color Vision. *Proceedings of the National Academy of Science,* 1986, vol. 83, 3078-3080
- Color Vision and The Natural Image. *Proceedings of the National Academy of Science,* 1959, vol. 45, 115-129
- Analog VLSI and Neural Systems. **C. MEAD.** Reading, Mass. Addison-Wesley, 1989
- **MOORE et al.** A Real-time Neural System for Color Constancy. *IEEE Transactions on Neural Networks,* March 1991, vol. 2, 237-247